Europäisches Patentamt

European Patent Office

Office européen des brevets

(19)

(11) Publication number: **0 140 704**
**A2**

# EUROPEAN PATENT APPLICATION

(12)

(21) Application number: 84307469.1

(22) Date of filing: 30.10.84

(51) Int. Cl.⁴: **H 04 N 7/167**

(30) Priority: 31.10.83 US 546919

(43) Date of publication of application: 08.05.85
Bulletin 85/19

(84) Designated Contracting States: DE FR GB IT NL

(71) Applicant: R F MONOLITHICS, INC., 4441 Sigma Road,
Dallas, TX 75234 (US)

(72) Inventor: Ragan, Lawrence H., c/o R.F. Monolithics
Inc. 4441 Sigma Road, Dallas Texas 75234 (US)
Inventor: Ash, Darrell L., c/o R.F. Monolithics
Inc. 4441 Sigma Road, Dallas Texas 75234 (US)

(74) Representative: George, Sidney Arthur et al, GILL
JENNINGS & EVERY 53-64 Chancery Lane, London
WC2A 1HN (GB)

(54) Television scrambling and descrambling method and apparatus.

(57) A television scrambling and descrambling system is
disclosed. Transmitter circuit (16, 18) switch between any
two consecutive segments of a signal causing delay times
which differ from each other by a significant fraction of the
horizontal sweep time, thereby scrambling the signal.
Switches (40, 42) in the descrambler switch between conse-
cutive time segments corresponding in number and complementary in delay times with the scrambler signal conse-
cutive segments. Differences in the delays of the consecu-
tive segments are provided in one arrangement by surface
acoustic wave delay lines (22, 37) in one of at least two sig-
nal paths. In another case, a delay line comprising a char-
ge-coupled device (CCD) provides the consecutive signal
segments having delay times which differ from each other.
Horizontal retrace intervals are detected by a pulse genera-
tor (26) which drives the switching between paths or pro-
vides clock pulses for the CCD during the horizontal inter-
vals. Switching information is modulated on to an interfer-
ing signal (28) which is demodulated by an AM demodulator
(48) in the descrambler.

R.F.MONOLITHICS,INC.                    31/2131/02

TELEVISION SCRAMBLING AND DESCRAMBLING METHOD AND

APPARATUS

This invention relates to a method and apparatus for preventing a television signal from being acceptably received by an unauthorised television receiver while maintaining the television signal recoverable by an authorised receiver.

Subscription televison is now in wide and growing use in both cable television and over-the-air systems. In over-the-air systems, preventing unauthorised receivers from receiving the transmission is a major problem for subscription services, but even cable television systems might desire to have different classes of customers which can be serviced over the same cable. For instance, a special rate might be charged for customers who want to view certain sporting events or first run movies. In order to solve these problems, many systems have been developed for preventing the reception of an acceptable television signal by unauthorised receivers.

Methods of scrambling and descrambling television signals to prevent unauthorised viewing of protected material have been proposed almost since the inception of television. Methods and apparatus from moving mirrors shown in U.S. Patent 2 531 974, to inserted carriers shown in U.S. Patent 4 074 311 have been proposed. Some systems in use today seek to modify the synchronisation pulses in the video signal as shown in U.S. Patent 3 924 059, or insert interfering video signals which are subsequently removed in the decrambling device as shown in U.S. Patent 4 112 464, or insert interfering carriers at the transmitter which are subsequently removed in the descrambling device with notch filters as shown in U.S. Patent 4 074 311.

Randomised switching between inverted and non-inverted video is expensive to perform in the decoder function, requiring demodulation of the received coded signal, and in the case of a set top decoder, the remodulation of the signal after it has been restored to viewable condition. While the systems using the method of injection of an interfering carrier do not require demodulation and remodulation, they have other disadvantages. Such systems can be easily defeated by persons with only modest means and effort. Extra transmitter power must be devoted to the interfering carrier. This is detrimental in cable systems, not so much for the slight penalty in consumed energy, but for the care and expense that are involved in maintaining linearity in all the amplifiers that must amplify the signals. The linearity problem becomes especially severe in over-the-air transmission systems because of the high transmitter power involved.

Further, synchronisation pulse modification or suppression system techniques are easy to defeat. On the other hand these techniques lead to very effective scrambling and good quality pictures after descrambling. By combining this technique with the present invention, a scrambling-descrambling system is obtained that is both secure and low in cost and delivers good quality descrambled video signals.

According to one aspect of the invention there is provided a method of transmitting and receiving a television signal of the type having a plurality of horizontal sweeps occurring during a single vertical sweep, characterised by the steps of switching the television signal between at least two scrambling signal paths having delay times which differ from each other by a significant fraction of the horizontal sweep time so that display of an acceptable signal is impossible without compensating for the difference in delay times of the switched television signal; transmitting the switched television signal; receiving the switched television signal; and switching the received television signal between at least two descrambling signal paths in a manner complementary to the switching between the scrambling signal paths whereby the total delay of any time segment of television signal through the combination of scrambling and descrambling signal paths substantially equals the total delay of any other time segment thereby compensating for the difference in delay times of the scrambling signal paths.

According to another aspect of the invention there is provided a system for transmitting and receiving a television signal of the type having a plurality of horizontal sweeps occurring during a vertical sweep, characterised by a transmission network having at least two scrambler signal paths with delay times which differ from each other by a significant fraction of the horizontal sweep time; means for switching the television signal between the scrambler signal paths; means coupled to the output of the scrambler signal paths for recombining the switched television signal; a transmitter coupled to the recombining means for transmitting the recombined, scrambled television signal; a receiver for receiving the transmitted scrambled television signal; descrambler signal paths in the receiver corresponding in number and complementary in delay times with the scrambler signal paths in the transmission network; means coupled to the descrambler paths for switching the scrambled signal between the descrambler signal paths in a manner complementary to the switching of the television signal between the scrambler signal paths wherein the total delay through the entire system remains substantially constant; and means for recombining the television signal from the descrambler signal paths to provide a usable descrambled television signal.

Preferably, scrambling is accomplished by switching between signal paths during horizontal retrace to minimise the ffects of switching transients on the reconstructed picture. The delay times in the different signal paths differ from each other by a significant fraction of the horizontal sweep time.

.In a preferred form, at least part of the delay in one of the scrambler signal paths is due to a surface acoustic wave device in the signal path and a means for attenuating the signal is placed in another signal path to compensate for the attenuation caused by the surface acoustic wave device.

In an alternative embodiment, a charge coupled device (CCD), or similar variable delay line, may be used as the scrambler-descrambler circuit. In that case, signals such as clock pulses are caused to vary the delay time of the CCD thus scrambling the output. By reversing the clock pulses at the receiver, the signal may be descrambled.

Embodiments of the invention will now be described, by way of example, with reference to the accompanying drawings, wherein

Figure 1 a schematic block diagram of a television scrambler for use in the present invention;

Figure 2 is a schematic block diagram of a television descrambler for use in the present invention; and

Figure 3 is a schematic block diagram of an alternative embodiment of a scrambler-descrambler device using a charge coupled device.

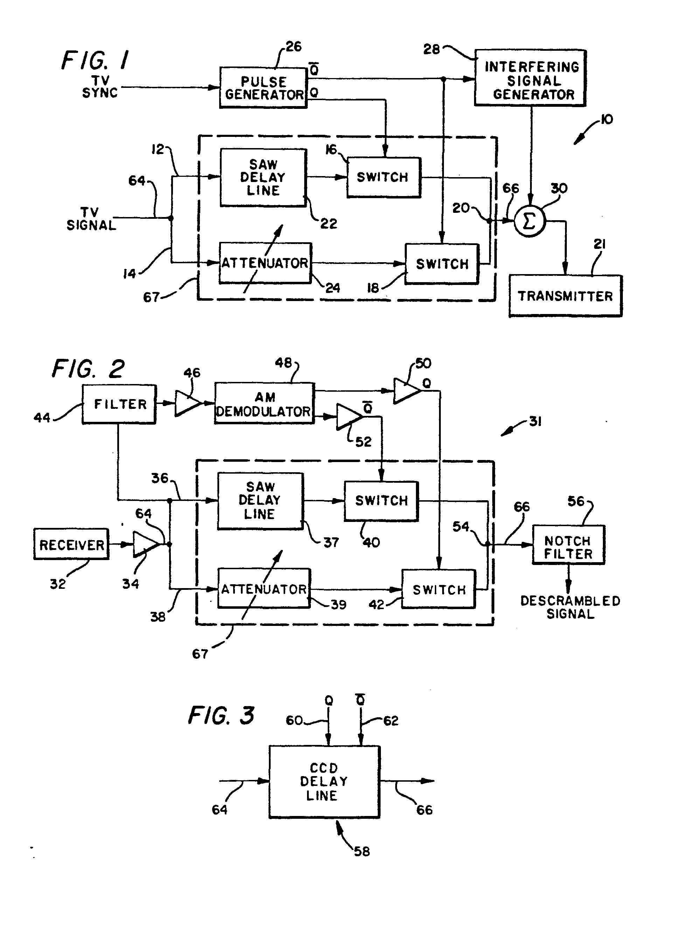

Referring now to Figure 1 of the drawings, a system for transmitting and receiving a television signal according to the present invention includes apparatus 10 for preventing a television signal of the ordinary type having a plurality of vertically spaced horizontal sweeps from being acceptably received by an unauthorised television receiver while maintaining the television signal recoverable by an authorised receiver. In one embodiment, the apparatus 10 includes at least two scrambler signal paths 12 and 14, and means for switching the television signal between the signal paths including switches 16 and 18. Means 20, which in this case is a mere wiring connection, recombines the television signal from the scrambler signal paths 12 and 14. A transmitter 21 then transmits the recombined television signal. The delay time through the scrambler signal path 12 differs from the delay through the scrambler signal path 14 by a significant fraction of the horizontal sweep time. In the United States, for instance, the time from the start of one horizontal line to the start of the next horizontal line is approximately 60 microseconds and the horizontal interval is approximately 10 microseconds. In such a system, a typical preferred range for difference in delay times between the signal paths 12 and 14 would be between approximately 3 and 5 microseconds. The first path 12 includes a surface acoustic wave device 22 in the signal path to act as a delay line, and the second path 14 includes means 24 for attenuating the signal to compensate for the attenuation caused by the surface acoustic wave device in the first path.

The apparatus 10 further includes means 26 for detecting the presence of intervals between horizontal sweeps, and in this particular case for detecting the television horizontal synchronisation pulse. The means 26 also acts as a pulse generator for driving the switches 16 and 18, switching the television signal between the scrambler signal paths during a horizontal interval. The pulse generating means 26 also drives an interfering signal generator 28 by AM modulating the interfering signal. Otherwise the interfering signal generator operates on the recombined television signal through summing means 30 in a manner well known in the art and described in U.S. Patent No. 4 074 311. By modulating the interfering signal with pulse generating means 26 for detecting horizontal intervals, the information for synchronising the received signal with the transmitted signal which describes the switch times of the time segments of the scrambling signal paths is transmitted along with the television signal.

Referring now to Figure 2, a descrambler for use in the present invention is referred to generally by reference numeral 31. The scrambled television signal is received by a receiver 32. It passes through a radio frequency amplifier 34 to descrambler signal paths 36 and 38 which correspond in number to the scrambler signal paths 12 and 14. In the case illustrated, the difference in the time delay between the descrambler signal path 36 and the descrambler signal path 38 is the same as the time difference between the two scrambler signal paths so that the time delay through the scrambler signal path 38 is complementary to the time delay through the scrambler signal path 12, and the time delay through the descrambler signal path 36 is complementary to the time delay through the scrambler signal path 14. This is easily accomplished by including a surface acoustic wave delay line 37 in the path 36 which matches the surface acoustic delay line 22, and by including an attenuator 39 in the path 38 which matches the loss in the delay line 37. Means including a switch 40 in the descrambler signal path 36 and a switch 42 in the descrambler signal path 38 switch between the descrambler signal paths in a manner complementary to the switching between the two or more scrambler signal paths. The total delay through the entire system thus remains substantially constant. A time segment of the signal which travels through the scrambler signal path 12 thus travels through the descrambler signal path 38, and the time segment of the signal which travels through the scrambler signal path 14 travels through the descrambler signal path 36. Each time segment of the signal thus travels through a comparable surface acoustic wave delay line and attenuator.

The interfering signal which was generated by the interfering signal generator 28 is picked off by a filter 44 and is amplified or buffered through an amplifier 46 before the information describing the switch times of the time segments of the two or more scrambling signal paths is interpreted by an AM demodulator 48. The switching information is then buffered and shaped by amplifiers 50 and 52 which in turn drive the switches 40 and 42. Means such as a wiring connection 54 recombines the television signal from the descrambler signal paths 36 and 38. Finally, the descrambled and recombined signal is passed through a notch filter 56 which removes the interfering signal, as described in U.S. Patent No. 4 074 311.

It can thus be seen that switching is effected between the various paths during the horizontal retrace to minimise the effects of switching transients on the reconstructed picture. The effect of the scrambling is then to shift portions of the picture to the left or right by an amount proportional to the difference in delay between the two paths. The television set of an unauthorised viewer then presents a picture which has portions of the picture displaced horizontally. Typically several lines are transmitted through a given path before the other path is selected. If the number of lines in each path is then selected on a pseudo-random basis which is asynchronous with the television field or frame rate, it becomes impossible to ascertain even the nature of the picture being transmitted.

There are several ways that the switching information can be provided to the demodulator. A switching signal could be modulated on the audio carrier, on additional carriers used as jammers, or on separate pilot tones transmitted at another frequency. The picture carrier frequency or phase could be modulated with switching information. A code could be transmitted during the vertical interval which the receiving apparatus could decode to operate subsequent fields or frames.

The delays in some of the scrambler and descrambler paths can be implemented at radio frequencies, obviating demodulation and remodulation of the video signal in add-on descrambler boxes for use in homes. Demodulation and remodulation not only add to the unit cost of descramblers, but deteriorate the picture quality as well. Surface acoustic wave SAW devices have excellent repeatability, necessary for accurate reproduction of the original picture. In large quantities, SAW devices can be manufactured at relatively low cost.

A scrambler system which uses this technique is relatively safe from "pirates" who manufacture and sell descramblers directly to potential users, thus depriving the programme provider of anticipated income. In order to manufacture an effective descrambler, the pirate would have to obtain SAW devices matched to the delays used in the transmitter. Barring the availability of SAW devices, the pirate would have to use coaxial cable or other electromagnetic transmission lines. Typically, several thousand feet of cable would be required to match the delay of the SAW devices anticipated. To reproduce the SAW devices requires a substantial investment, which could be recovered only by selling a large number of descramblers. Sellers of large numbers are relatively easy to trace and to apprehend.

Figure 3 illustrates an alternative embodiment of a circuit which may be used in the transmitter as the scrambler or in the receiver as the descrambler, and replacing the circuitry 67 in Figures 1 and 2.

As is well known in the art, the charge coupled device 58 in Figure 3 may be caused to delay an input signal on a line 64 by varying the clock pulses applied to lines designated as Q and $\bar{Q}$. Thus, if for a first period of time the clock pulses applied to a line 60 were of a first frequency and then for a second period of time the clock pulses were applied to a line 62 at a different frequency, and those time periods were randomly selected, the output signal on a line 66 would be scrambled.

Thus, scrambling of the television signal occurs by switching consequentive segments of the television signal between at least two delay times which differ from each other by a significant fraction of the horizontal sweep time. The display of an acceptable signal is then impossible without compensating for the difference in delay times of the switched television signal. When the scrambled signal is received, descrambling occurs by switching the delay times of the received consecutive segments in a manner complementary to the switching of the segments in the transmitted signal wherein the total time delay of any of the consecutive segments of the television signal through the scrambling and descrambling circuits substantially equals the total delay of any other time segment. Thus the difference in delay times of the segments of the transmitted signal is compensated for by the complementary delay time occurring in the receiver.

0140704

By reversing the process at the receiver, that is, by reversing the clock pulse frequencies applied to the CCD, the signal could be descrambled. It is understood by those skilled in the art that CCD's operate at a lower frequency than SAW devices and will therefore require the use of demodulators to translate frequencies into the frequency range of the CCD. It is also understood by those skilled in the art that the function of the CCD can be provided by means of an A-D converter, digital shift registers and D-A converters connected in tandem.

CLAIMS

1. A method of transmitting and receiving a television signal of the type having a plurality of horizontal sweeps occurring during a single vertical sweep, characterised by the steps of switching (16,18) the television signal between at least two scrambling signal paths (12,14) having delay times which differ from each other by a significant fraction of the horizontal sweep time so that display of an acceptable signal is impossible without compensating for the difference in delay times of the switched television signal; transmitting (21) the switched television signal; receiving (32) the switched television signal; and switching (40,42) the received television signal between at least two descrambling signal paths (36,38) in a manner complementary to the switching between the scrambling signal paths whereby the total delay of any time segment of television signal through the combination of scrambling and descrambling signal paths substantially equals the total delay of any other time segment thereby compensating for the difference in delay times of the scrambling signal paths.

2. A method according to claim 1, characterised by the steps of transmitting (26) and receiving (48) information for synchronising the received signal with the transmitted signal; and describing with the information the switching times of the time segments of the scrambling and descrambling signal paths.

3. A method according to claim 1 or claim 2, characterised by the steps of recombining (20) the switched signals from the different scrambling signal paths prior to transmission; and recombining (54) the switched signals from the descrambling signal paths to form a descrambled television signal.

4. A method according to any preceding claim, characterised by the steps of detecting (26) the presence of the intervals between horizontal sweeps prior to switching the signal between the scrambling signal paths; and switching (16,18) the television signal between the scrambling signal paths (12,14) in the detected intervals.

5. A method of preventing a television signal having a plurality of horizontal sweeps occurring during a single vertical sweep from being acceptably viewed by an unauthorised television receiver while maintaining the television signal recoverable by an authorised receiver which is switchable between at least two descrambling signal paths having delay times which differ from each other by a significant fraction of the horizontal sweep time, characterised by the steps of scrambling the television signal by switching (16,18) the signal between scrambling signal paths (12,14) correpsonding to said two or more signal paths of an authorised receiver so that display of an acceptable signal is impossible without compensating for the difference in delay times of the scrambled television signal; transmitting (21) the switched signal; and receiving (32) and descrambling (67) the transmitted television signal by switching (40,42) the signal between at least two descrambling signal paths (36,38) in a manner complementary to the switching of the transmitted signal, thereby making the total delay of any time segment of the television signal through the combination of a scrambling signal path and a descrambling signal path of an authorised receiver substantially equal to the total delay of any other time segment.

6. A method according to claim 5, characterised by the step of transmitting decoding information describing the switch times of the time segments of the transmitted signal.

7. A method according to claim 5 or claim 6, characterised by the step of recombining (20) the signals travelling in the different scrambling signal paths (12,14) prior to transmission.

8. A method according to any one of claims 5-7, characterised by the steps of detecting (26) the presence of the intervals between horizontal sweeps prior to switching, whereby the step of switching is performed during those intervals.

9. A method of producing an acceptable television signal from a scrambled signal which has been switched between at least two scrambling signal paths having delay times which differ from each other by a significant fraction of a horizontal sweep time, characterised by the steps of switching (40,42) the scrambled television signal between at least two signal paths (36,38) corresponding in a complementary manner to the switching between the descrambling signal paths, wherein the total delay of any time segment of television signal through the combination of signal paths substantially equals the total delay of any other time segment whereby compensation for the difference in delay times in the scrambled television signal is obtained; and recombining (54) the switched signals to provide a descrambled television signal.

10. A system for transmitting and receiving a television signal of the type having a plurality of horizontal sweeps occurring during a vertical sweep, characterised by a transmission network (10) having at least two scrambler signal paths (12,14) with delay times which differ from each other by a significant fraction of the horizontal sweep time; means (16,18) for switching the television signal between the scrambler signal paths;

means (20) coupled to the output of the scrambler signal paths for recombining the switched television signal; a transmitter (21) coupled to the recombining means for transmitting the recombined, scrambled television signal; a receiver (32) for receiving the transmitted scrambled television signal; descrambler signal paths (36,38) in the receiver corresponding in number and complementary in delay times with the scrambler signal paths in the transmission network; means (40,42) coupled to the descrambler paths for switching the scrambled signal between the descrambler signal paths in a manner complementary to the switching of the television signal between the scrambler signal paths wherein the total delay through the entire system remains substantially constant; and means (54) for recombining the television signal from the descrambler signal paths to provide a usable descrambled television signal.

11. A system according to claim 10, characterised by a surface acoustic wave device (22) in at least one of the scrambler signal paths (12); and a surface acoustic wave device (37) in at least one of the descrambler signal paths (36).

12. A system according to claim 10 or claim 11, characterised by means (26) for detecting the presence of intervals between horizontal sweeps; and means (16,18) coupled to the interval detecting means for switching the television signal between the scrambler signal paths (12,14) during a detected horizontal interval.

13. Apparatus for preventing a television signal of the ordinary type requiring a plurality of sweeps across a display screen in a first direction which occur during a single sweep in a second direction from being acceptably viewed by an unauthorised television receiver while maintaining the television signal recoverable by an authorised receiver which has a signal channel switchable between at least two descrambler signal paths (36,38) having delay times which differ from each other by a significant fraction of the sweep time in the first direction, characterised by a transmission network having scrambler signal paths (12,14) corresponding in number and complementary in delay times with the descrambler signal paths; means (16,18) in the network for switching the television signal between the scrambler signal paths; and a transmitter (21) coupled to the network for transmitting the switched television signal.

14. Apparatus according to claim 13, characterised by a surface acoustic wave device (22) in one of the scrambler signal paths (12).

15. Apparatus according to claim 14, characterised by means (24) in the other of the scrambler signal paths (14) for attenuating the signal to compensate for the attenuation caused by the surface acoustic wave device (22) in said one of the scrambler signal paths (12).

16. Apparatus according to claim 15, characterised by means (20) for recombining the television signal from the scrambler signal paths (12,14) prior to transmitting.

17. Apparatus according to any one of claims 13 to 16, characterised by means (26) for detecting the presence of intervals between horizontal sweeps; and means (16,18) coupled to the interval detecting means for switching the television signal between the scrambler signal paths (12,14) during a detected horizontal interval.

18. Apparatus for producing an acceptable television signal received from a scrambler in which the signal is switched between at least two scrambler signal paths (12,14) having delay times which differ from each other by a signficiant fraction of the shorter of the horizontal and vertical sweep times, characterised by descrambler signal paths (36,38) corresponding in number and complementary in delay times with the scrambler signal paths; and means (40,42) for switching between the descrambler signal paths in a manner complementary to the switching between the scrambler signal paths, wherein the total delay through the combined scrambler and complementary descrambler signal paths remains substantially constant.

19. Apparatus according to claim 18, characterised by a surface acoustic wave device (37) in a first one of the descrambler signal paths (36).

20. Apparatus according to claim 19, characterised by means (39) for attenuating the signal in a second one of the descrambler signal paths (38) to compensate for the attenuation caused by the surface acoustic wave device (37) in said first path (36).

21. Apparatus according to any one of claims 18-20, characterised by means (54) coupled to the signal paths (36,38) for recombining the television switched signals to obtain a descrambled signal.

22. A method of transmitting and receiving a television signal of the type having a plurality of horizontal sweeps occurring during a vertical sweep, characterised by the steps of scrambling the televisi8on signal by switching (126,18) consecutive segments of the television signal between at least two delay times which differ from each other by a significant fraction of the horizontal sweep time so that displaying of an acceptable signal is impossible without compensating for the difference in delay times of the switched segments of the television signal; transmitting (21) the switched signal; receiving (32) the switched television signal; and descrambling the received television signal by switching (40,42) the delay time of consecutive segments of the received television signal in a manner complementary to the switching of the segments in the transmitted signal whereby the total time delay of any of the consecutive segments of the television signal through the combination of transmitter scrambling and receiver descrambling substantially equals the total delay of any other time segment, whereby the difference in delay times of the transmitted switched television signal is compensated for by the complementary switching in the receiver.

23. A method according to claim 22, characterised by the steps of transmitting (26,28) and receiving (48) information for synchronising the received signal with the transmitted signal, and describing with said information the switching times of the consecutive time segments.

24. A method of preventing a television signal of the ordinary type which has a plurality of horizontal sweeps occurring during a single vertical sweep from being acceptably viewed by an unauthorised television receiver while maintaining the television signal recoverable by an authorised receiver which is capable of descrambling the signal by switching the delay time of at least any two consecutive segments of the television signal, the consecutive delay times differing from each other by a significant fraction of the horizontal sweep time, characterised by the steps of scrambling the television signal by switching (16,18) the delay time of any two of the consecutive segments of the transmitted signal corresponding and complementary to the delay times of the corresponding consecutive segments in the authorised receiver so that display of an acceptable signal is impossible without compensating for the difference in delay times of the transmitted television signal, wherein switching the delay times of consecutive segments of the transmitted television signal between the delay times occurs in a manner complementary to the switching of the corresponding delay times of the received signal thereby making the total delay of any time segment of the television signal through the combination of the transmitted delay and the authorised receiver delay substantially equal; and transmitting (21) the scrambled signal.

25. A method according to claim 24, characterised by the step of transmitting (26,28) information describing the switch times of said consecutive time segments.

26. A method according to claim 24 or claim 25, characterised by the steps of detecting (26) the presence of the intervals between horizontal sweeps prior to switching; and switching (16,18) the delay times in the detected intervals.

27. A method of producing an acceptable television signal from a scrambled signal in which at least any two consecutive segments of the signal have delay times which differ from each other by a significant fraction of a horizontal sweep time, characterised by the steps of descrambling the television signal by switching (40,42) two or more consecutive segments of the scrambled television signal between at least two delay times in a manner complementary to the switched delay times of the corresponding transmitted consecutive segments wherein the total delay of any time segment of the television signal through the transmitter-receiver combination substantially equals the total delay of any other time segment whereby compensation for the difference in delay times in the scrambled television signal is achieved; and coupling the descrambled signal to an authorised receiver.

28. A method as claimed in any one of claims 1-9, or 22-27, characterised in that the step of transmitting the switched signal includes the steps of generating (28) an interfering carrier within the band width of the transmitted television signal for obliterating sound signals and interfering with the television signal reception; developing switching information (26) from the synchronization information; and modulating the interfering carrier with decoding information.

29. A system for transmitting and receiving a television signal of the type having a plurality of horizontal sweeps occurring during a single vertical sweep, characterised by at least any two consecutive television signal segments having delay times which differ from each other by a significant fraction of the horizontal sweep time; a transmitter (21) coupled to signal scrambling means for transmitting the scrambled television signal having differing delay times for at least any two consecutive segments; a receiver (32) for receiving the transmitted television signal; means (36-42) coupled to the receiver for descrambling the received television signal by causing said two or more received consecutive tleevision signal segments to have delay times which differ from each other in a manner complementary to the consecutive segments of the transmitted television signal whereby the total delay through the entire system remains substantially constant; and video display means coupled to the descrambling means for viewing the descrambled signal.

30. A system according to claim 28, characterised by means (26) for detecting the presence of intervals between horizontal sweeps, and means (16,18) coupled to the interval detecting means for switching the delay times between the two or more consecutive segments during a detected horizontal interval.

31. Apparatus for preventing a television signal of the ordinary type which has a plurality of sweeps across a display screen in a first direction during a single sweep in a second direction from being acceptably viewed by an unauthorised television receiver while maintaining the television signal recoverable by an authorised receiver which is capable of switching the delay time of any two consecutive segments of a television signal, which consecutive delay times differ from each other by a significant fraction of the sweep time in the first direction, characterised by means (12-24) for scrambling the television signal by switching the delay time of any two consecutive segments thereof corresponding in number and complementary in delay times with the two or more segment delay times in the authorised receiver; and a transmitter (21) for transmitting the scrambled television signal.

32. Apparatus for producing an acceptable television signal received from a scrambler (12-24) in which the signal has consecutive segments, any two of which segments have delay times which differ from each other by a significant fraction of the shorter of the horizontal and vertical sweep times, characterised by means (36-42) for descrambling the signal by receiving consecutive signal segments corresponding in number and complementary in delay times with the two or more consecutive segments of the transmitted signal; and means (40,42) in the descrambling means for switching the delay times of the two or more consecutive segments of the scrambled signal in a manner complementary to the switching between the two or more transmitted consecutive segments, wherein the total delay of the combined scrambled and complementary descrambled signals remains substantially constant.

**FIG. 1**

TV SYNC → PULSE GENERATOR (26) — $\bar{Q}$, $Q$

INTERFERING SIGNAL GENERATOR (28)

TV SIGNAL (64) →

SAW DELAY LINE (12) → SWITCH (16) (22)

ATTENUATOR (14) → SWITCH (18) (24)

(67)

Σ (66)(30) → TRANSMITTER (21)

(20)

(10)

**FIG. 2**

FILTER (44) → (46) → AM DEMODULATOR (48) → (52) $\bar{Q}$ → (50) $Q$

RECEIVER (32) → (34)(64)

SAW DELAY LINE (36)(37) → SWITCH (40)

ATTENUATOR (38)(39) → SWITCH (42)

(54)(66) → NOTCH FILTER (56) → DESCRAMBLED SIGNAL

(67)

(31)

**FIG. 3**

Q (60)   $\bar{Q}$ (62)

(64) → CCD DELAY LINE → (66)

(58)